# EUROPÄISCHE PATENTSCHRIFT

(11) **EP 2 392 516 B1**
(45) Veröffentlichungstag und Bekanntmachung des Hinweises auf die Patenterteilung: **20.07.2016**
(21) Anmeldenummer: 11167396.8
(22) Anmeldetag: 25.05.2011
(51) Int. Cl.: B65C 9/40, B67B 3/26, B67C 3/00, B29C 49/78

(54) **Behälterbehandlungsanlage und Qualitätssicherungsverfahren für mit einer Behälterbehandlungsanlage hergestellte Behälter**
Container treatment assembly and quality assurance method for containers produced using a container treatment assembly
Installation de traitement de récipient et procédé de sécurisation de la qualité pour des récipients fabriqués à l'aide d'une installation de traitement de récipient

(30) Priorität: 01.06.2010 DE 102010022405
(43) Veröffentlichungstag der Anmeldung: 07.12.2011
(73) Patentinhaber: Krones AG, 93073 Neutraubling (DE)
(72) Erfinder: Hahn, Wolfgang, 93073 Neutraubling (DE); Dewert, Andreas, 93073 Neutraubling (DE); Raith, Stefan, 93073 Neutraubling (DE)
(74) Vertreter: Bittner, Bernhard

(56) Entgegenhaltungen:
- EP-A1- 0 328 249
- WO-A1-2011/030207
- WO-A1-2011/030211
- DE-A1-102008 034 744
- US-A1- 2007 107 801
- US-A1- 2010 115 888

## Beschreibung

Die Erfindung bezieht sich auf eine Behälterbehandlungsanlage gemäß dem Oberbegriff des Anspruchs 1, und wie aus der EP 0 328 249 A1 bekannt, und ein Qualitätssicherungsverfahren für mit einer Behälterbehandlungsanlage hergestellten Behältern.

Bei Behälterbehandlungsanlagen werden Vorformlinge aus Kunststoff, wie beispielsweise Polyethylenterephthalat (PET), Polypropylen (PP) usw., zu Behältern umgeformt, wie beispielsweise Flaschen, und anschließend mit einem Etikett etikettiert, mit einem Medium, wie beispielsweise einem Getränk, einem Reinigungsmittel usw., befüllt, gereinigt und verpackt usw. Zu diesem Zweck werden die auf einem Transportpfad durch die Behälterbehandlungsanlage transportierten Vorformlinge in einer Heizvorrichtung erwärmt, damit sie dann in einer Streckblasvorrichtung mittels eines Streckblasvorgangs zu Kunststoffbehältern expandiert und gestreckt werden können. Anschließend werden die Kunststoffbehälter zu weiteren Behandlungsvorrichtungen, wie beispielsweise einer Reinigungsvorrichtung, einer Etikettiervorrichtung, einer Füllvorrichtung, einer Sortiervorrichtung, einer Verpackungsvorrichtung, usw. transportiert.

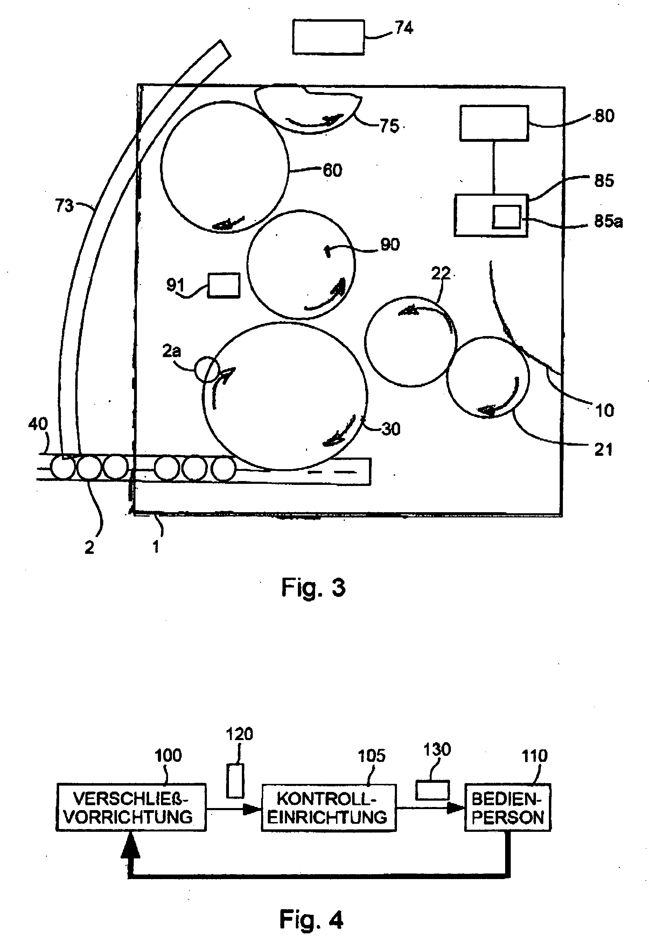

Wie in Fig. 4 dargestellt, wird derzeit die Qualität von einer solchen Behälterbehandlungsanlage hergestellten Behälter von Bedienpersonal der Behälterbehandlungsanlage oder von Laborpersonal in der Behälterbehandlungsanlage oder in einem Labor durchgeführt. In Fig. 4 ist als Beispiel für die Behälterbehandlungsanlage eine Verschließvorrichtung 100, insbesondere ein Servo-Verschließer, gezeigt. Hierbei entnimmt eine Bedienperson 110 nach vorbestimmten Zeitdauern, wie beispielsweise jede Stunde, eine vorgegebenen Anzahl, beispielsweise 16 Stück, von mit der Verschließvorrichtung 100 verschlossenen Behältern 120, die mittels einer Kontrolleinrichtung 105 auf ihre Qualität hin kontrolliert werden.

Alternativ kann auch jeweils ein Behälter 120 je Verschließkopf entnommen werden. Danach wird jeder Behälter 120 einzeln in eine in der Kontrolleinrichtung 105 vorhandene und nicht dargestellte Einrichtung zur Ermittlung des Aufdrehwerts (Torque) eingespannt und aufgedreht. Der ermittelte Wert für den Aufdrehwert wird als Ist-Qualitätswert dokumentiert. Stellt die Bedienperson 110 mittels eines von der Kontrolleinrichtung 105 ausgegebenen Fehlercodes 130 zu große Abweichungen eines Ist-Qualitätswerts von einem vorgegebenen Qualitätswert, dem Soll-Qualitätswert, fest, ist sie gehalten, Betriebseinstellungen/Betriebsparameter an der Verschließvorrichtung 100 bzw. der Behälterbehandlungsanlage von Hand auf der Grundlage ihrer Erfahrung zu ändern, um die Soll-Qualität zu erreichen.

Eine solche Änderung der Betriebseinstellungen/Betriebsparameter ist in Fig. 4 als dicker schwarzer Pfeil dargestellt und ist also bei verschiedenen Bedienpersonen 110 uneinheitlich, da die Fehlercodes 130 unterschiedlich interpretiert werden. Zudem stehen sehr viele und dazu noch voneinander abhängige Parameter zur Verfügung. Dadurch schleichen sich leicht Fehler bei der Änderung der Betriebseinstellungen/Betriebsparameter ein. Zudem werden derzeit die Parameter für alle Verschließköpfe bzw. Verschließstationen einer Verschließvorrichtung 100 immer gleich geändert. Damit kann der Fehler nur eines bestimmten Verschließkopfes nicht behoben werden.

Weiterhin sind aus dem Stand der Technik Inspektionsvorrichtungen bekannt, welche laufend die Behältnisse innerhalb eines Produktionsstromes inspizieren und beispielsweise fehlerhafte Produkte aussortieren. Diese Vorrichtungen erlauben jedoch einerseits keine stichprobenartige Kontrolle und sind aufgrund der Untersuchung sämtlicher Stückgüter auch nicht für eine Regelung der Anlage auf Basis festgestellter Fehler geeignet.

In der Regel sind die zum Zwecke der Kontrolle von der Behälterbehandlungsanlage entnommenen Behälter anschließend zu entsorgen. Dies ist beispielsweise der Fall, wenn die Verschlüsse von Behältern kontrolliert werden, die mittels der Füllvorrichtung befüllt wurden und dabei die Verschlüsse bzw. der Sicherheitsring am Verschluss zerstört wurden. Hier ist dann zusätzlich auch der Inhalt der kontrollierten Behälter zu entsorgen.

Die manuelle Kontrolle der Behälter auf die Soll-Qualität, welche beispielsweise nach der Füll- und Verschließvorrichtung eine Kontrolle anhand einer Brixwert-Messung, einer CO2-Messung, einer Nitratgehalt-Messung, einer Leitwert-Messung usw. umfasst, gestaltet sich aufwändig, ungenau und kostenintensiv, da eine Bedienperson immer bestimmte Zeiten zur Entnahme der Behälter einhalten muss. Zudem muss gegebenenfalls die Geschwindigkeit der Behälterbehandlungsanlage oder zumindest einer ihrer Behälterbehandlungsvorrichtungen heruntergefahren werden, um der Bedienperson ein gefahrloses Entnehmen der zu kontrollierenden Behälter zu ermöglichen. Dies führt zu einem geringeren Durchsatz der Behälterbehandlungsanlage, wodurch sich die Produktionskosten weiter erhöhen.

Es ist daher Aufgabe der Erfindung, eine Behälterbehandlungsanlage und ein Qualitätssicherungsverfahren für mit einer Behälterbehandlungsanlage hergestellten Behältern zur Verfügung zu stellen, welche kostengünstig ermöglichen, dass eine Qualitätssicherung für von einer Behälterbehandlungsanlage hergestellte Behälter kostengünstig und zuverlässig vorgenommen werden kann.

Die Aufgabe wird durch eine Behälterbehandlungsanlage nach Patentanspruch 1 gelöst.

Vorteilhafte weitere Ausgestaltungen der Behälterbehandlungsanlage sind in den abhängigen Patentansprüchen angegeben.

Vorteilhaft weist die Behälterbehandlungsanlage mehrere Behälterbehandlungsvorrichtungen auf, welche die Behältnisse in definierter, jedoch unterschiedlicher Weise behandeln. Besonders vorteilhaft weist die Behälterbehandlungsanlage eine Fülleinrichtung auf, welche die Behälter mit einem Medium und insbesondere einer Flüssigkeit befüllt, sowie eine in der Transportrichtung der Behältnisse nach dieser Fülleinrichtung angeordnete Verschließeinrichtung, welche die Behältnisse mit einem Verschluss verschließt. Die Fülleinrichtung kann dabei eine Vielzahl von Füllelementen zum Befüllen der Behälter aufweisen. Vorteilhaft ist neben der Verschließeinrichtung auch eine Verschlusszuführeinrichtung vorgesehen, welche der Verschließeinrichtung die Verschlüsse zum Verschließen der Behälter zuführt.

Daneben weist die Behälterbehandlungsanlage auch wenigstens eine Transporteinrichtung auf, welche die Behältnisse entlang eines vorgegebenen Transportpfades transportiert. Diese Transporteinrichtung ist dabei vorteilhaft zum vereinzelten Transport der Behältnisse ausgestaltet. In einer weiteren vorteilhaften Ausgestaltung weist die Behälteranlage eine Etikettiereinrichtung auf, welche die Behältnisse mit Etiketten versieht, wobei diese Etikettiereinrichtung vor oder auch nach der Fülleinrichtung angeordnet sein kann. In einer weiteren bevorzugten Ausführungsform weist die Behälterbehandlungsanlage auch eine Vorrichtung zur Produktaufbereitung auf, welche das abzufüllende Produkt aufbereitet. Vorteilhaft ist die oben erwähnte Kontrolleinrichtung in der Transportrichtung der Behältnisse nach der Verschließeinrichtung, welche die Behältnisse mit Verschlüssen verschließt, angeordnet.

Die Behälterbehandlungsanlage hat eine Aussortiereinrichtung zur Aussortierung von auf ihre Qualität zu kontrollierenden Behältern nach einer Behandlung durch die Behälterbehandlungsvorrichtung. Hierbei kann die Aussortiereinrichtung zur Übergabe der Behälter an einen Transportstern zum Transport der Behälter ausgestaltet sein, welcher einen Antrieb, bevorzugt einen Direktantrieb zum Antrieb des Transportsterns in eine Drehbewegung derart aufweist, dass der Transportstern bei von der Behälterbehandlungsvorrichtung vorgegebenen Geschwindigkeit auf ihre Qualität zu kontrollierende Behälter aussortiert und diese vor Übergabe an die Kontrolleinrichtung zur Kontrolle der Qualität der Behälter abbremst.

Es ist vorteilhaft, wenn die Kontrolleinrichtung in einer Labor- oder Hygieneumgebung, bzw. einem Sterilraum angeordnet ist.

Vorzugsweise ist an der Behälterbehandlungsanlage zudem eine Zerstörungseinrichtung und/oder Entsorgungseinrichtung zur Zerstörung und/oder Entsorgung der von der Kontrolleinrichtung kontrollierten Behälter angeordnet.

Es ist auch möglich, dass an der Behälterbehandlungsanlage eine Rückleitungseinrichtung zur Rückleitung von der Aussortiereinrichtung aussortierten und von der Kontrolleinrichtung kontrollierten Behälter in einen Strom von der Behälterbehandlungsvorrichtung behandelten Behältern angeordnet ist.

Die Behälterbehandlungsanlage kann auch mindestens eine weitere Behälterbehandlungsvorrichtung zur Behandlung von Behältern und mindestens eine weitere Aussortiereinrichtung zur Aussortierung von auf ihre Qualität zu kontrollierenden Behältern nach einer Behandlung durch die mindestens eine weitere Behälterbehandlungsvorrichtung aufweisen, wobei auch diese aussortierten Behälter der Kontrolleinrichtung zur Kontrolle auf ihre Qualität zuführbar sind.

Bevorzugt ist die Aussortiereinrichtung zur Aussortierung von Behältern ausgestaltet, die für eine vorgegebene statistische Auswertung in der Kontrolleinrichtung benötigt werden. So kann beispielsweise eine vorgegebene Anzahl von Behältern entnommen und diese auf ein bestimmtes Kriterium hin geprüft werden. Aus diesen Messergebnissen kann ein statistischer Parameter wie etwa ein Mittelwert entnommen werden.

Die Aussortiereinrichtung kann auch derart ausgestaltet sein, dass sie Behälter aufgrund von vorbestimmten qualitätskritischen Betriebszuständen der Behälterbehandlungsvorrichtung und/oder aufgrund von Vorgaben der Behälterbehandlungsvorrichtung aussortiert.

Von der Kontrolleinrichtung kontrollierte Behälter können zudem mittels einer Markiereinrichtung markierbar sein bzw. markiert werden.

Die Aufgabe wird zudem durch ein Qualitätssicherungsverfahren für mit einer Behälterbehandlungsanlage hergestellten Behältern nach Patentanspruch 9 gelöst. Das Qualitätssicherungsverfahren umfasst die Schritte: Behandeln von Behältern mit einer Behälterbehandlungsvorrichtung der Behälterbehandlungsanlage, und Sichern der Qualität der von der Behälterbehandlungsvorrichtung behandelten Behälter durch Steuern der Behälterbehandlungsvorrichtung auf der Grundlage eines Ergebnisses eines Vergleichs eines vorbestimmten Qualität-Sollwerts mit einem von einer Kontrolleinrichtung ermittelten Qualität-Istwert eines (insbesondere von einer Aussortierrichtung) zur Kontrolle seiner Qualität aussortierten Behälters. Unter einem Aussortieren wird verstanden, dass ein Transportpfad des aussortierten Behälters wenigstens abschnittsweise von dem Transportpfad des nicht aussortierten Behälters abweicht.

Nachfolgend wird die Erfindung unter Bezugnahme auf die beiliegende Zeichnung und anhand von Ausführungsbeispielen näher beschrieben. Es zeigt:
- Fig. 1: eine schematische Draufsicht auf eine Behälterbehandlungsanlage gemäß einem ersten Ausführungsbeispiel ;
- Fig. 2: ein schematisches Blockschaltbild zur Veranschaulichung der Qualitätssicherung gemäß dem ersten und zweiten Ausführungsbeispiel ;
- Fig. 3: eine schematische Draufsicht auf eine Behälterbehandlungsanlage gemäß einem dritten, erfindungsgemäßen, Ausführungsbeispiel der vorliegenden Erfindung; und
- Fig. 4: ein schematisches Blockschaltbild zur Veranschaulichung der Qualitätssicherung gemäß dem Stand der Technik.

### (Erstes Ausführungsbeispiel)

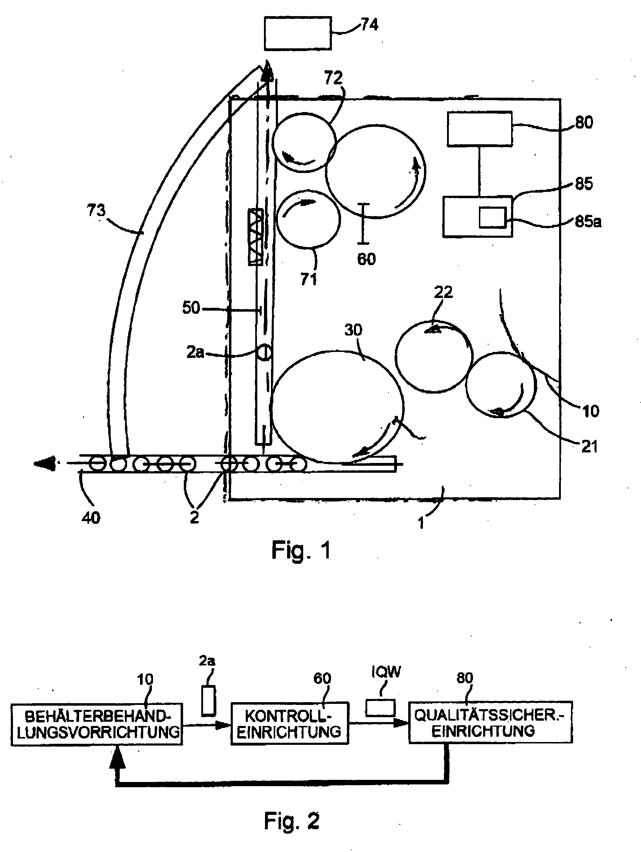

Fig. 1 zeigt eine Behälterbehandlungsanlage 1 zur Behandlung von Behältern 2, wie beispielsweise einen Vorformling oder eine Flasche, die beispielsweise aus dem Vorformling geformt wurde, wie beim Stand der Technik beschrieben. Die Behälterbehandlungsanlage 1 hat eine Behälterbehandlungsvorrichtung 10, zwei Transportsterne 21, 22, einen Behandlungsauslaufstern 30, eine Förderbahn 40 zum Transport der von der Behälterbehandlungsvorrichtung 10 behandelten Behälter 2 aus der Behälterbehandlungsanlage 1, und eine Förderbahn 50 zum Transport von auf ihre Qualität zu kontrollierenden Behältern 2a zu einer Kontrolleinrichtung 60, welcher die Behälter 2a über einen Kontrolleinlaufstern 71 zugeführt werden, und von welcher die Behälter 2a über einen Kontrollauslaufstern 72 wieder an die Förderbahn 50 übergeben werden.

Zudem ist an der Behälterbehandlungsanlage 1 eine Rückleitungseinrichtung 73 und eine Zerstörungseinrichtung und/oder Entsorgungseinrichtung 74 angeordnet. Außerdem umfasst die Behälterbehandlungsanlage 1 eine Qualitätssicherungseinrichtung 80 zur Sicherung der Qualität von der Behälterbehandlungsvorrichtung behandelten Behältern 2, 2a, und eine Dokumentationseinrichtung 85 mit einer Markiereinrichtung 85a. Die Pfeile in Fig. 1 geben jeweils die Transportrichtung der Behälter 2, 2a in der Behälterbehandlungsanlage 1 an.

Die Behälterbehandlungsvorrichtung 10 kann beispielsweise eine Heizvorrichtung, eine Streckblasvorrichtung, eine Etikettiervorrichtung, eine Füllvorrichtung, eine Verschlusseinrichtung, eine Reinigungsvorrichtung, eine Sterilisationsvorrichtung, eine Verpackungsvorrichtung, usw. sein. Die Heizvorrichtung dient zum Erwärmen von Vorformlingen auf eine für einen Streckblasvorgang geeignete Temperatur. Die Streckblasvorrichtung dient zur Ausführung eines Streckblasvorgangs für die von der Heizvorrichtung erwärmten Behälter. Die Etikettiervorrichtung dient zum Etikettieren der Behälter mit einem Etikett. Die Füllvorrichtung dient zum Befüllen der Behälter mit einem Medium, wie beispielsweise einem Getränk, einem Kosmetikprodukt, einer Reinigungsflüssigkeit, usw. Die Verschlusseinrichtung dient zum Verschließen von mit einem Medium befüllten Behältern mit einem Verschluss, beispielsweise einem Drehverschluss mit Sicherheitsring. Die Füllvorrichtung und die Verschlusseinrichtung können auch in einer Vorrichtung integriert sein, so dass sie eine Füll- und Verschlussvorrichtung bilden. Die Reinigungsvorrichtung dient zur Reinigung von Behältern vor oder nach einem vorbestimmten Behandlungsvorgang, beispielsweise vor einem Etikettieren der Behälter oder nach einem Befüllen mit einem Medium usw. Die Verpackungsvorrichtung dient zum Verpacken von zur Auslieferung bereiten Behältern.

Die Behälterbehandlungsanlage 1 kann mehr als eine Behälterbehandlungsvorrichtung 10 umfassen.

Vorzugsweise weist die Behälterbehandlungsvorrichtung 10 eine Verschlussvorrichtung oder eine Füll- und Verschlussvorrichtung auf. Bei dieser kann die Kontrolle bzw. Prüfung / Messung auch beim Verschließer bzw. Verschließkopf durchgeführt werden, indem eine Integration in/am Verschließer bzw. am Verschließkopf vorgenommen wird.

Der Behandlungsauslaufstern 30 bildet eine Aussortiereinrichtung zum Aussortieren von Behältern 2a, die mit der Kontrolleinrichtung 60 auf ihre Qualität zu kontrollieren sind, aus dem Strom von Behältern 2, die aus der Behälterbehandlungsvorrichtung 10 ausgegeben werden. Die Kontrolleinrichtung 60 führt die Kontrolle also offline, das heißt außerhalb des Stroms von Behältern 2 in der Behälterbehandlungsanlage 1, durch.

Die Aussortiereinrichtung 30 sortiert die Behälter 2a automatisch aus dem Strom von Behältern 2 aus und übergibt sie an die Förderbahn 50, welche die Behälter 2a dem Einlaufstern 71 und mit dessen Hilfe der Kontrolleinrichtung 60 zuführen. Auf diese Weise kann die Behälterbehandlungsanlage 1 auch bei einem Aussortieren bzw. einer Entnahme von Behältern 2a, die auf ihre Qualität hin zu kontrollieren sind, mit unveränderter Geschwindigkeit gegenüber dem Fall betrieben werden, wenn keine Behälter 2a auszusortieren sind. Zudem können die Behälter 2a durch die Förderbahn 50 mit einer wesentlich geringeren Geschwindigkeit als die Geschwindigkeit des Behandlungsauslaufsterns 30 gefördert bzw. transportiert werden. Das heißt, die Förderbahn 50 bremst die Behälter 2a stark ab, so dass die Kontrolleinrichtung 60 ebenfalls mit einer wesentlich geringeren Geschwindigkeit und damit Leistung gefahren werden kann und somit nur für eine solche auszulegen ist. Hierdurch kann die Kontrolleinrichtung 60 auch kleinere Gruppen von Behältern 2a direkt nacheinander verarbeiten.

Wie in Fig. 2 schematisch veranschaulicht kontrolliert die Kontrolleinrichtung 60 die von der Behälterbehandlungsvorrichtung 10 bzw. der Behälterbehandlungsanlage 1 aussortierten Behälter 2a im Hinblick auf ihre Qualität und legt hierzu verschiedenste Messungen zugrunde, welche den Behälter 2a und/oder das darin enthaltene Produkt entweder zerstören oder nicht zerstören. Die Messungen können mit Hilfe geeigneter, nicht dargestellter Erfässungseinrichtungen vor oder nach der Aussortierung der Behälter 2a aus dem Strom der von der Behälterbehandlungsanlage 1 ausgegebenen Behälter 2 durchgeführt werden. Zerstörende Prüfungen bzw. Messungen sind beispielsweise eine Brixwert-Messung, eine Leitwert-Messung, eine Nitratgehalt-Messung, eine Ozongehalt-Messung, eine Säuregehalt-Messung, eine pH-Wert-Messung, eine Produktfarbe-Messung, eine Stresscrack-Messung, eine Berstdruck-Messung, eine Wanddruck-Messung, eine Aufdrehwert-Messung mit Beschädigung des Sicherungsringes usw. Nicht-zerstörende Prüfungen bzw. Messungen sind beispielsweise eine CO2-Messung, eine Aufdrehwert-Messung ohne Beschädigung des Sicherungsringes, eine Gewichts-Messung, eine Dosenbördelungs-Messung, eine Dichtigkeit-Messung (Squeezen) usw. Zur Ermittlung des Aufdrehwerts kann ein elektronisches Torquemeter mit Datenanschluss zum Einsatz kommen, welches die ermittelten Aufdrehwerte (Torque) über den Datenanschluss an die Qualitätssicherungseinrichtung 80 weitergibt.

Entsprechen die Messungen zuvor festgelegten Sollwerten, wird von der Qualitätssicherungseinrichtung 80 darauf geschlossen, dass die von der Behälterbehandlungsanlage 1 ausgegebenen Behälter 2 die vorgegebenen Qualitätsstandards erfüllen. Demzufolge können die Betriebseinstellungen / Betriebsparameter von Komponenten der Behälterbehandlungsanlage 1 vor dem Ausschleusepunkt bzw. Aussortierpunkt der Behälter 2a unverändert bleiben.

Entsprechen dagegen die Messungen nicht den zuvor festgelegten Sollwerten, wird von der Qualitätssicherungseinrichtung 80 darauf geschlossen, dass die von der Behälterbehandlungsanlage 1 ausgegebenen Behälter 2 die vorgegebenen Qualitätsstandards nicht erfüllen. Das heißt, der Ist-Qualitätswert IQW der Behälter 2a und somit auch der Behälter 2 ist ungleich dem Soll-Qualitätswert und insbesondere schlechter als der Soll-Qualitätswert. In diesem Fall wird aufgrund von in einer nicht dargestellten Speichereinrichtung gespeicherten Daten ermittelt, was der Grund für die Nichterfüllung der vorgegebenen Qualitätsstandards ist. Auf dieser Grundlage kann die Qualitätssicherungseinrichtung 80 Betriebseinstellungen / Betriebsparameter von Komponenten der Behälterbehandlungsanlage 1 vor dem Ausschleusepunkt bzw. Aussortierpunkt der Behälter 2a auf der Grundlage der Messungen (automatisch) verändern, was in Fig. 2 mittels des dicken schwarzen Pfeils dargestellt ist.

Die Qualitätssicherungseinrichtung 80 führt also eine automatische Korrektur von Betriebseinstellungen / Betriebsparametern durch (dicker schwarzer Pfeil in Fig. 2). Zudem kann die Qualitätssicherungseinrichtung 80 bewirken, dass nicht den Qualitätsstandards entsprechende Behälter 2 aus dem Strom der von der Behälterbehandlungsanlage 1 bzw. der Behälterbehandlungsvorrichtung 10 ausgegeben Behälter 2 aussortiert werden.

Die Soll-Qualitätswerte für eine Behandlung durch eine Behandlungsvorrichtung 10 können als Festwert in einer Speichereinrichtung hinterlegt sein, beispielsweise vor Auslieferung der Behandlungsvorrichtung 10. Bevorzugt werden die Soll-Qualitätswerte am Aufstellungs- und Betriebsort der Behandlungsvorrichtung durch den Betreiber oder entsprechend qualifiziertes Personal angepasst.

Eine Veränderung von Betriebseinstellungen / Betriebsparameter von Komponenten der Behälterbehandlungsanlage 1 kann beispielsweise eine Regelung der Betriebseinstellungen / Betriebsparameter der Behälterbehandlungsvorrichtung 10 sein, nach der die Behälter 2a zur Kontrolle aussortiert wurden, oder mindestens einer dieser Behälterbehandlungsvorrichtung 10 vorgeschalteten Behälterbehandlungsvorrichtung 10 , das heißt der Heizvorrichtung, der Streckblasvorrichtung, der Füllvorrichtung, der Verschließvorrichtung oder einer Mixereinrichtung der Füllvorrichtung auf einen anderen Wert sein; oder es kann auch eine Anzeige einer Alarmmeldung sein; oder es kann ein Stillsetzen einer bestimmten Komponente, beispielsweise eines Füllventils der Füllvorrichtung, eines Etikettieraggregats von mehreren Etikettieraggregaten der Etikettiervorrichtung, usw. oder auch der gesamten Streckblasvorrichtung, der Füllvorrichtung, der Heizvorrichtung usw. oder auch einer von mehreren Verschließvorrichtungen usw. sein; oder es kann auch eine Produktionsfreigabe für eine bestimmte Komponente sein.

Genauer gesagt, die Qualitätssicherungsvorrichtung 80 dient zur Sicherung der Qualität der von einer Behälterbehandlungsvorrichtung 10 behandelten Behälter 2, 2a durch Steuerung der Behälterbehandlungsvorrichtung 10 und/oder ihr vorgelagerter Behälterbehandlungsvorrichtungen 10 auf der Grundlage eines Ergebnisses eines Vergleichs eines vorbestimmten Qualität-Sollwerts mit einem von der Kontrolleinrichtung 60 ermittelten Qualität-Istwert eines zur Kontrolle seiner Qualität aussortierten Behälters 2a. Damit findet hier eine Regelung der Behälterbehandlungsvorrichtung statt.

Bei zerstörenden Prüfungen bzw. Messungen, sind die Behälter 2a nach der durch die Kontrolleinrichtung 60 durchgeführten Kontrolle mit Hilfe einer Entsorgungseinrichtung zu entsorgen. Bei nicht-zerstörenden Prüfungen bzw. Messungen können die Behälter 2a nach der durch die Kontrolleinrichtung 60 durchgeführten Kontrolle mittels der Rückleitungseinrichtung 73 wieder in den Strom der aus der Behälterbehandlungsanlage 1 ausgegebenen Behälter 2 zurückgeleitet werden. Jedoch können die Behälter 2a auch an die Zerstörungseinrichtung und/oder Entsorgungseinrichtung 74 übergeben werden.

Die Aussortierung der Behälter 2a aus dem Strom der aus der Behälterbehandlungsanlage 1 bzw. der Behälterbehandlungsvorrichtung 10 ausgegebenen Behälter 2 ist gemäß mindestens einer oder auch Kombinationen der nachfolgend genannten Arten frei wählbar: stichprobenhaft; über manuelle Anforderung; automatisch nach Ablauf vorbestimmter, das heißt im Voraus festgelegten jedoch veränderbaren Zeitendauern; automatisch nach Erreichen eines vorbestimmten, das heißt im Voraus festgelegten jedoch veränderbaren Durchsatz von Behältern 2 durch eine Behälterbehandlungsvorrichtung 10 und/oder die Behälterbehandlungsanlage 1; sequenziell, das heißt mehrere Behälter nacheinander; über Leitstand; Batchgebunden, das heißt chargengebunden; gesteuert über eine statistische Erhebung vorzugsweise zur Erhärtung eines Verdachts; in kritischen Situationen, wie beispielsweise einem Tankwechsel, einem Verbrauchsmaterialwechsel, wie beispielsweise einer Etikettierrolle usw., nach Behälterbehandlungsanlagen- und/oder Behälterbehandlungsvorrichtungsstillstand, nach oder vor Sortenwechsel von beispielsweise des Behältertyps, des Etiketttyps, des Füllmediums, des Verschlusstyps usw.; nach automatischer Regelung der zu überprüfenden Behälterbehandlungsvorrichtung 10. Für die Aussortierung nach den genannten Aussortierarten weist die Qualitätssicherungseinrichtung 80 ein entsprechendes Computerprogramm auf.

Vorzugsweise wird die Aussortierung der Behälter 2a aus dem Strom der aus der Behälterbehandlungsanlage 1 bzw. der Behälterbehandlungsvorrichtung 10 ausgegebenen Behälter 2 über eine statistische Erhebung vorzugsweise zur Erhärtung eines Verdachts durchgeführt. Genauer gesagt, bei Abweichungen von vorgegebenen Prüfparametern bzw. Soll-Qualitätswerten können sicherheitshalber automatisch zusätzliche Prüfvorgänge bzw. Kontrollen von zusätzlichen Behältern 2a durchgeführt werden, um evtl. Abweichungen zu bestätigen. Als andere bevorzugte Alternative kann die Aussortierung der Behälter 2a aus dem Strom der aus der Behälterbehandlungsanlage 1 bzw. der Behälterbehandlungsvorrichtung 10 ausgegebenen Behälter 2 nach automatischer Regelung der zu überprüfenden Behälterbehandlungsvorrichtung 10 erfolgen.

Die Ergebnisse der Kontrolleinrichtung 30 und der Qualitätssicherungseinrichtung 80 können mittels der in Fig. 1 schematisch gezeigten Dokumentationseinrichtung 85 dokumentiert werden. Es kann beispielsweise dokumentiert werden, welche Bedienperson die Behälterbehandlungsanlage 1 bedient hat, es kann ein Zeitstempel, Organnummern, Messergebnisse, eine Paretoverteilung, und/oder (Organ)-Statistiken usw. dokumentiert werden. Die Dokumentationseinrichtung 85 kann die Markiereinrichtung 85a (Fig. 1) zur Markierung von Behältern 2a aufweisen, die von der Aussortiereinrichtung 30 aussortiert und mit der Kontrolleinrichtung 60 geprüft wurden. Die Markiereinrichtung 85a kann die Behälter 2a mit Hilfe von beispielsweise einer Druckeinrichtung markieren. Die Markierung kann Angaben über alle Behandlungsorgane und/oder Greiferelemente des jeweiligen Behälters 2a enthalten. Zudem kann die Markierung einen Zeitstempel umfassen und Angaben über eine Bedienperson und einen Aussortiergrund durch die Aussortiereinrichtung 30 und/oder Ausleitgrund nach der Kontrolleinrichtung 60 enthalten. Es können auch weitere Angaben enthalten sein oder andere Markierungen für weitere Angaben vorgenommen werden.

Darüber hinaus kann die Qualitätssicherung einer Zugriffssicherheit unterliegen. Dies bedeutet, dass auf die Durchführung der Qualitätssicherung durch die Qualitätssicherungseinrichtung nur Einfluss genommen werden kann, wenn eine Bedienperson hierzu berechtigt ist. Dies kann mittels eines Transponders und/oder eines persönlichen Passworts, und/oder automatisch über ein Netzwerk erfolgen, welches mit einer Stempeluhr und/oder einer Zugangsberechtigung zu der Behälterbehandlungsanlage 1 verbunden ist, die mit einem Türöffner gekoppelt sein kann.

Durch die Kopplung der Behälterbehandlungsanlage 1 mit der Kontrolleinrichtung 60 und der Qualitätssicherungseinrichtung 80 ist ein Eingriff einer Bedienperson zur Veränderung von Betriebseinstellungen/Betriebsparametern der Behälterbehandlungsanlage 1 bzw. ihrer Komponenten nicht mehr erforderlich. Die Veränderung von Betriebseinstellungen/Betriebsparametern der Behälterbehandlungsanlage 1 bzw. ihrer Komponenten wird mittels der Qualitätssicherungseinrichtung 80 automatisch ausgeführt.

### (Zweites Ausführungsbeispiel)

Die Behälterbehandlungsanlage 1 gemäß dem zweiten Ausführungsbeispiel weist als Behälterbehandlungsvorrichtung 10 eine Verschlussvorrichtung oder eine Füll- und Verschlussvorrichtung auf. Auch wenn bei dieser, wie zuvor beschrieben, die Kontrolle bzw. Prüfung / Messung auch beim Verschließer bzw. Verschließkopf durchgeführt werden kann, indem eine Integration in/am Verschließer bzw. am Verschließkopf vorgenommen wird, wird nachfolgend eine Offline-Kontrolle beschrieben. Das heißt die Kontrolleinrichtung 60 ist nicht am Verschließer angeordnet, sondern wie in Fig. 1 dargestellt. Die anderen Teile von Fig. 1 und Fig. 2 sind bei diesem Ausführungsbeispiel gleich und gleichbedeutend und sind daher nicht noch einmal beschrieben.

Jeder Servomotor eines Verschließkopfes bzw. einer Verschließstation der Verschließvorrichtung 10 kann unterschiedliche Betriebsparameter annehmen. Dies ist über Hardware und/oder steuerungstechnisch möglich. Für einen Verschluss eines Behälters 2, 2a mit einem Verschließkopf wird eine Grundeinstellung der Parameter festgelegt und eingestellt.

Wie bei dem ersten Ausführungsbeispiel im Zusammenhang mit Fig. 2 beschrieben, kann die Kontrolleinrichtung 60 für jede Verschließstation separat Fehlverschließungen feststellen. Hierzu werden mittels der Aussortiereinrichtung 30 entsprechende Behälter 2a aussortiert, die den einzelnen Verschließstationen zuordenbar sind. Die Kontrolleinrichtung 60 kann dann mittels eines elektronischen Torquemeters mit Datenanschluss den Aufdrehwert für die Verschlüsse der jeweiligen Behälter 2a ermitteln und an die Qualitätssicherungseinrichtung 80 weitergeben. Die Qualitätssicherungseinrichtung 80 führt dann den Vergleich für die Ist-Qualitätswerte IQW mit dem Soll-Qualitätswert, genauer gesagt für den Ist-Aufdrehwert mit dem Soll-Aufdrehwert, für jede Verschließstation separat durch. Auf diese Weise kann die Qualitätssicherungseinrichtung 80 die Parameter für jede Verschließstation separat anpassen bzw. ändern, falls erforderlich, wie bei dem ersten Ausführungsbeispiel beschrieben.

Je mehr Ist-Aufdrehwerte je Verschließstation aufgenommen werden, desto genauer ist das Ergebnis der Qualitätssicherung.

Die Fehlverschließungen werden als Fehlercodes an die Qualitätssicherungseinrichtung 80 weitergegeben bzw. die Qualitätssicherungseinrichtung 80 ermittelt aus den Ist-Aufdrehwerten je Verschließstation die entsprechenden Fehlercodes. Die Qualitätssicherungseinrichtung 80 kann die Fehlverschließungen über statistische Algorithmen auswerten. Anhand dieser Ergebnisse werden die Parameter der jeweiligen Verschließstation angepasst und einer Steuereinrichtung der Qualitätssicherungseinrichtung 80 übergeben. Je mehr Verschließungen vor einer Neuparametrierung aufgezeichnet werden, beispielsweise aufgrund einer Gauss'schen Verteilung, umso genauer sind die neuen Parameter. Hierbei ist eine einmalige oder aber auch eine permanente/stichprobenartige Überwachung und Kalibrierung der Verschließer-Servomotoren denkbar.

### (Drittes Ausführungsbeispiel)

Die Behälterbehandlungsanlage 1 gemäß dem dritten, erfindungsgemäßen, Ausführungsbeispiel weist anstelle einer Förderbahn 50 und eines Kontrolleinlaufsterns 71, die in Fig. 1 für das erste und zweite Ausführungsbeispiel gezeigt sind, einen Transportstern 90 auf, wie in Fig. 3 gezeigt. Der Transportstern 90 wird mit einem Direktantrieb in eine durch einen Pfeil angegebene Drehbewegung angetrieben. Die anderen Teile von Fig. 3 sind gleich und gleichbedeutend mit den in Fig. 1 gezeigten Teilen. Daher sind gleiche und gleichbedeutende Teile in beiden Ausführungsbeispielen mit den gleichen Bezugszeichen bezeichnet.

Wie aus Fig. 3 ersichtlich, erfolgt die Übergabe von Behältern 2a vom Behandlungsauslaufstern 30 an die Kontrolleinrichtung 60 bei diesem Ausführungsbeispiel mittels des Transportsterns 90 bzw. Servosterns, der bei der Übergabe eines Behälters 2a die Transportgeschwindigkeit des Behälters 2a stark reduziert und den Behälter 2a mit geringer Geschwindigkeit an die Kontrolleinrichtung 60 direkt übergibt. Alternativ kann der Transportstern 90 den Behälter 2a mit geringer Geschwindigkeit auch erst an einen (nicht dargestellten) Zwischenstern übergeben, welcher den Behälter 2a dann an die Kontrolleinrichtung 60 übergibt. Das heißt die Übergabe zwischen Transportstern 90 und Kontrolleinrichtung 60 ist bei dieser Alternative indirekt.

Nach der Kontrolleinrichtung 60 kann der von der Kontrolleinrichtung 60 kontrollierte Behälter 2a in Fig. 3 entweder direkt an die Rückleitungseinrichtung 73 zur Rückleitung des Behälters in den Strom der aus der Behälterbehandlungsanlage 1 ausgegebenen Behälter 2 oder direkt an die Zerstörungseinrichtung und/oder Entsorgungseinrichtung 74 übergeben werden. Alternativ kann die Kontrolleinrichtung 60 die Behälter 2a auch erst an einen Zwischenstern 75 in Fig. 3 übergeben, welcher den Behälter 2a dann entweder an die Rückleitungseinrichtung 73 übergibt oder ihn direkt an eine Zerstörungseinrichtung und/oder Entsorgungseinrichtung 74 übergibt. Das heißt die Übergabe von der Kontrolleinrichtung 60 ist bei dieser Alternative indirekt.

### (Allgemeines)

Alle zuvor beschriebenen Ausgestaltungen der Behälterbehandlungsanlage und des Qualitätssicherungsverfahrens können einzeln oder in allen möglichen Kombinationen Verwendung finden. Hierbei sind insbesondere folgende Modifikationen denkbar.

Die Ausführung der Zuleitung der Behälter 2a von der Behandlungsvorrichtung 10 zu der Kontrolleinrichtung 60 kann bei jedem des ersten und zweiten Ausführungsbeispiels entweder auf die in Fig. 1 oder die in Fig. 4 gezeigte Ausführungsart erfolgen.

Die Form der Förderbahnen 40, 50 ist grundsätzlich beliebig und kann an die tatsächlichen Gegebenheiten angepasst sein.

Bei den Behältern 2 kann es sich um Vorformlinge, um aus Vorformlingen durch einen Streckblasvorgang hergestellte Kunststoffbehältnisse, beispielsweise Kunststoffflaschen, um Glasflaschen, um Dosen usw. handeln.

Auch wenn die Kontrolleinrichtung 60 in Fig. 1 und Fig. 4 als Teil der Behälterbehandlungsanlage 1 dargestellt ist, kann die Kontrolleinrichtung 60 und gegebenenfalls auch der Kontrolleinlaufstern 71, der Kontrollauslaufstern 72 und die entsprechenden Transportsterne in Fig. 4 jedoch auch außerhalb der Behälterbehandlungsanlage 1 bzw. ihrer Einhausung angeordnet sein.

Das Aussortieren von Behältern 2a, die mit der Kontrolleinrichtung 60 auf ihre Qualität zu kontrollieren sind, aus dem Strom von Behältern 2, die aus der Behälterbehandlungsvorrichtung 10 ausgegeben werden, mittels der Aussortiereinrichtung 30 kann auch außerhalb der Behälterbehandlungsanlage 1 erfolgen, auch wenn dies in Fig. 1 und Fig. 4 nicht dargestellt ist. In diesem Fall ist vorzugsweise auch die Kontrolleinrichtung 60 außerhalb der Behälterbehandlungsanlage 1 angeordnet, beispielsweise in einem separaten Raum, wie beispielsweise einer Laborumgebung und/oder Hygieneumgebung. Dies ist insbesondere vorteilhaft, um die Einhaltung von Hygienevorschriften in Bezug auf ein in den Behälter 2a gefülltes Kosmetikprodukt oder ein Getränk zu kontrollieren.

Zudem können die Qualitätssicherungseinrichtung 80, die Dokumentationseinrichtung 85 und die Markiereinrichtung 85a außerhalb der Behälterbehandlungsanlage 1 bzw. ihrer Einhausung angeordnet sein. Darüber hinaus muss die Markiereinrichtung 85a kein Teil der Dokumentationseinrichtung 85 sein sondern kann auch separat bereitgestellt sein.

Die Behälterbehandlungsanlage 1 kann auch mehr als eine Behälterbehandlungsvorrichtung 10 zur Behandlung von Behältern haben, beispielsweise eine Etikettiervorrichtung und eine Füllvorrichtung usw. Es ist auch möglich, dass die Behälterbehandlungsanlage 1 zwei oder mehr gleiche Behälterbehandlungsvorrichtungen 10 aufweist, beispielsweise zwei Füllvorrichtungen und/oder zwei Verschließeinrichtungen usw. Von jeder Behälterbehandlungsvorrichtung 10 können von dieser behandelte Behälter 2 mittels einer Aussortiereinrichtung 30 zur Aussortierung von auf ihre Qualität zu kontrollierenden Behältern 2a nach einer Behandlung durch die jeweilige Behälterbehandlungsvorrichtung 10 aussortiert werden. Alle aussortierten Behälter können der gleichen Kontrolleinrichtung 60 zur Kontrolle der Behälter 2 auf ihre Qualität zugeführt werden.

### Bezugszeichenliste

- 1: Behälterbehandlungsanlage
- 2: Behälter
- 2a: zu kontrollierender Behälter
- 10: Behälterbehandlungsvorrichtung
- 21: Transportstern
- 22: Transportstern
- 30: Behandlungsauslaufstern bzw. Aussortiereinrichtung
- 40: Förderbahn
- 50: Förderbahn
- 60: Kontrolleinrichtung
- 71: Kontrolleinlaufstern
- 72: Kontrollauslaufstern
- 73: Rückleitungseinrichtung
- 74: Zerstörungseinrichtung und/oder Entsorgungseinrichtung
- 75: Zwischenstern
- 80: Qualitätssicherungseinrichtung
- 85: Dokumentationseinrichtung
- 85a: Markiereinrichtung
- 90: Transportstern
- 91: Direktantrieb
- 100: Verschließvorrichtung
- 105: Kontrolleinrichtung
- 110: Bedienperson
- 120: Behälter
- 130: Fehlercode
- IQW: Ist-Qualitätswert

## Patentansprüche

1. Behälterbehandlungsanlage (1), mit
einer Behilterbehandlungsvorrichtung (10) zur Behandlung von Behältern (2, 2a), und
einer Qualitätssicherungsvorrichtung (80) zur Sicherung der Qualität der von der Behälterbehandlungsvorrichtung (10) behandelten Behälter (2, 2a) durch Steuerung der Behälterbehandlungsvorrichtung (10) auf der Grundlage eines Ergebnisses eines Vergleichs eines vorbestimmten Qualität-Sollwerts mit einem von einer Kontrolleinrichtung (60) ermittelten Qualität-Istwert (IQW) eines zur Kontrolle seiner Qualität aussortierten Behälters (2a) und mit einer Aussortiereinrichtung (30) zur Aussortierung von auf ihre Quatität zu kontrollierenden Behältern (2a) nach einer Behandlung durch die Behälterbehandlungsvorrichtung (10), **dadurch gekennzeichnet dass** die Aussortiereinrichtung (30) zur Übergabe der Behälter (2a) an einem Transportstern (90) zum Transport der Behälter (2a) ausgestaltet ist, wobei der Transportstem (90) einen Antrieb zum Antrieb des Transportsterns in eine Drehbewegung derart aufweist, dass der Transportstern bei von der Behälterbehandlungsvorrichtung (10) vorgegebener Geschwindigkeit auf Ihre Qualität zu kontrollierende Behälter (2a) aussortiert und diese vor Übergabe an die Kontrolleinrichtung (60) zur Kontrolle der Qualität der Behälter (2a) abbremst.

2. Behälterbehandlungsanlage nach Ansprunch 1, wobei die Kontrolleinrichtung (60) in einer Labor- oder Hygieneumgebung angeordnet ist.

3. Behälterbehandlungsanlage nach einem der vorangehenden Ansprüche, wobei die Behälterbehandlungsanlage (1) eine Zerstörungseinrichtung und/oder Entsorgungseinrichtung (74) zur Zerstörung und/oder Entsorgung der von der Kontrolleinrichtung (60) kontrollierten Behälter (2a) aufweist.

4. Behälterbehandlungsanlage nach einem der Ansprüche 1 bis 3, wobei die Behälterbehandlungsanlage (1) eine Rückteitungseinrichtung (73) zur Rückleitung von der Aussortiereinrichtung (30) aussortierten und von der Kontrolleinrichtung (60) kontrollierten Behälter (2a) in einen Strom von der Behälterberhandlungsvorrichtung (10) behandelten Behältern (2) aufweise.

5. Behälterbehandlungsanlage nach einem der vorangehenden Ansprüche, zudem mit mindestens einer weiteren Behälterbehandlungsvorrichtung (10) zur Behandlung von Behältern (2, 2a) und mindestens einer weiteren Aussortiereinrichtung (30) zur Aussortierung von auf ihre Qualität zu kontrollierenden Behältern (2a) nach einer Behandlung durch die mindestens eine weitere Behälterbehandlungsvorrichtung (10), wobei auch diese aussortierten Behälter (2a) der Kontrolleinrichtung (60) zur Kontrolle auf ihre Qualität zuführbar sind.

6. Behälterbehandlungsanlage nach einem der vorangehenden Ansprüche, wobei die Aussortiereinrichtung (30) zur Aussortierung von Behältern (2a) ausgestaltet ist, die für eine vorgegebene statistische Auswertung in der Kontrolleinrichtung (60) benötigt werden.

7. Behälterbehandlungsanlage nach einem der vorangehenden Ansprüche, wobei die Aussortiereinrichtung (30) derart ausgestaltet ist, dass sie Behälter (2a) aufgrund von vorbestimmten quatitätskritischen Betriebszuständen der Behälterbehandlungsvorrichtung (10) und/oder aufgrund von Vorgaben der Behälterbehandlungsvorrichtung (10) aussortiert.

8. Behälterbehandlungsanlage nach einem der vorangehenden Ansprüche, wobei von der Kontrolleinrichtung (60) kontrollierte Behälter (2a) mittels einer Markiereinrichtung (85ä) markierbar sind.

9. Quatitätssicherungsverfahreh für mit einer Behälterbehandlungsanlage (1) nach wenigstens einem der vorangegangenen Ansprüche hergestellten Behältern (2, 2a), mit den Schritten
Behandeln von Behältern (2, 2a) mit einer Behälterbehandlungsvorrichtung (10) der Behälterbehandlungsanlage (1), und
Sichern der Qualität der von der Behälterbehandlungsvorrichtung (10) behandelten Behälter (2, 2a) durch Steuern der Behälterbehandlungsvorrichtung (10) auf der Grundlage eines Ergebnisses eines Vergleichs eines vorbestimmten Qualität-Sollwerts mit einem von einer Kontrolleinrichtung (60) ermittelten Qualität-Istwert (IQW) eines zur Kontrolle seiner Qualität aussortierten Behälters (2a).

## Claims

1. A container treatment plant (1) with a container treatment apparatus (10) for the treatment of containers (2, 2a), and a quality ensuring apparatus (80) to ensure the quality of the containers (2, 2a) treated by the container treatment apparatus (10) by controlling the container treatment apparatus (10) on the basis of a result of a comparison of a pre-determined nominal quality value with an actual quality value (IQW) - determined by a monitoring device (60) - of a container (2a) separated in order to monitor its quality and with a separating device (30) for separating containers (2a) to be controlled with respect to their quality after having been treated by the container treatment apparatus (10), **characterized in that** the separating device (30) is designed to transfer the containers (2a) at a transport star wheel (90) to transport the containers (2a), wherein the transport star wheel (90) comprises a drive for driving the transport star wheel in a rotational movement in such a way that the transport star wheel separates containers (2a) to be controlled with respect to their quality at a speed pre-set by the container treatment apparatus (10) and slows down these containers prior to the transfer to the control device (60) for controlling the quality of the containers (2a).

2. A container treatment plant according to claim 1, wherein the control device (60) is arranged in a laboratory or hygienic environment.

3. A container treatment plant according to any one of the preceding claims, wherein the container treatment plant (1) comprises a destruction device and/or a disposal device (74) for the destruction and/or disposal of the containers (2a) controlled by the control device (60).

4. A container treatment plant according to any one of claims 1 to 3, wherein the container treatment plant (1) comprises a return device (73) for the return of containers (2a) - separated by the separating device (30) and controlled by the control device (60) - in a flow of containers (2) treated by the container treatment apparatus (10).

5. A container treatment plant according to any one of the preceding claims, in addition with at least one further container treatment apparatus (10) for the treatment of containers (2, 2a) and at least one further separating device (30) for the separation of containers (2a) to be controlled with respect to their quality after treatment by the at least one further container treatment apparatus (10), wherein these separated containers (2a) are also capable of being supplied to the control device (60) for controlling their quality.

6. A container treatment plant according to any one of the preceding claims, wherein the separating device (30) is designed for the separation of containers (2a) which are required for a pre-set statistical evaluation in the control device (60).

7. A container treatment plant according to any one of the preceding claims, wherein the separating device (30) is designed in such a way that it separates containers (2a) on the basis of pre-determined quality-related operative states of the container treatment apparatus (10) and/or on the basis of requirements of the container treatment apparatus (10).

8. A container treatment plant according to any one of the preceding claims, wherein containers (2a) controlled by the control device (60) are capable of being marked by means of a marking device (85a).

9. A quality ensuring method for containers (2, 2a) produced by a container treatment plant (1) according to at least one of the preceding claims with the steps: treatment of containers (2, 2a) with a container treatment apparatus (10) of the container treatment plant (1), and ensuring the quality of the containers (2, 2a) treated by the container treatment apparatus (10) by controlling the container treatment apparatus (10) on the basis of a result of a comparison of a pre-determined nominal quality value with an actual quality value (IQW) - determined by a monitoring device (60) - of a container (2a) separated in order to control its quality.

## Revendications

1. Installation de traitement de récipients (1), avec un dispositif de traitement de récipients (10) pour traiter des récipients (2, 2a), et
un dispositif d'assurance de qualité (80) pour assurer la qualité des récipients (2, 2a) traités par le dispositif de traitement de récipients (10) par la commande du dispositif de traitement de récipients (10) déterminée par un dispositif de contrôle (60) sur la base d'un résultat d'une comparaison d'une valeur de consigne de qualité prédéterminée avec une valeur réelle de qualité (IQW) d'un récipient (2a) sélectionné pour le contrôle de sa qualité et avec un dispositif de sélection (30) pour la sélection de récipients (2a) dont la qualité doit être contrôlée, après traitement par le dispositif de traitement de récipients (10), **caractérisé en ce que** le dispositif de sélection (30) pour le transfert des récipients (2a) est adapté à une étoile de transport (90) pour le transport des récipients (2a), l'étoile de transport (90) comprenant un dispositif d'entraînement pour l'entraînement de l'étoile de transport dans un mouvement de rotation, de façon à ce que l'étoile de transport sélectionne, à une vitesse prédéterminée par le dispositif de traitement de récipients (10), les récipients (2a) dont la qualité doit être contrôlée et freine ceux-ci avant leur transfert vers le dispositif de contrôle (60) pour le contrôle de la qualité des récipients (2a).

2. Installation de traitement de récipients selon la revendication 1, le dispositif de contrôle (60) étant disposé dans un environnement de laboratoire ou dans un environnement hygiénique.

3. Installation de traitement de récipients selon l'une des revendications précédentes, l'installation de traitement de récipients (1) comprenant un dispositif de destruction et/ou un dispositif d'élimination (74) pour la destruction et/ou l'élimination des récipients (2a) contrôlés par le dispositif de contrôle (60).

4. Installation de traitement de récipients selon l'une des revendications 1 à 3, l'installation de traitement de récipients (1) comprenant un dispositif de retour (73) pour le retour des récipients (2a) sélectionnés par le dispositif de sélection (30) et contrôlés par le dispositif de contrôle (60) dans un flux de récipients (2) traités par le dispositif de traitement de récipients (10).

5. Installation de traitement de récipients selon l'une des revendications précédentes, l'installation comprenant en outre au moins un dispositif de traitement de récipients (10) supplémentaire pour traiter les récipients (2, 2a) et au moins un dispositif de sélection (30) supplémentaire pour la sélection de récipients (2a) dont la qualité doit être contrôlée après traitement par l'au moins un dispositif de traitement de récipients (10) supplémentaire, ces récipients (2a) sélectionnés pouvant également être introduits dans le dispositif de contrôle (60) pour le contrôle de leur qualité.

6. Installation de traitement de récipients selon l'une des revendications précédentes, le dispositif de sélection (30) étant conçu pour la sélection de récipients (2a) qui sont nécessaires pour une analyse statistique prédéterminée dans le dispositif de contrôle (60).

7. Installation de traitement de récipients selon l'une des revendications précédentes, le dispositif de sélection (30) étant conçu de façon à sélectionner des récipients (2a) sur la base d'états de fonctionnement prédéterminés de la qualité critique du dispositif de traitement de récipients (10) et/ou sur la base des spécifications du dispositif de traitement de récipients (10).

8. Installation de traitement de récipients selon l'une des revendications précédentes, des récipients contrôlés (2a) par le dispositif de contrôle (60) peuvent être marqués par un dispositif de marquage (85a).

9. Procédé d'assurance de qualité pour des récipients (2, 2a) fabriqués avec une installation de traitement de récipients (1) selon au moins l'une des revendications précédentes, comprenant les étapes suivantes :
- traiter des récipients (2, 2a) avec un dispositif de traitement de récipients (10) de l'installation de traitement de récipients (1), et
- garantir de la qualité des récipients (2, 2a) traités par le dispositif de traitement de récipients (10) par commande du dispositif de traitement de récipients (10) sur la base d'un résultat d'une comparaison d'une valeur de consigne de qualité prédéterminée avec une valeur réelle de qualité (IQW), déterminée par un dispositif de contrôle (60), d'un récipient (2a) sélectionné pour le contrôle de sa qualité.
